Europäisches Patentamt

(19) European Patent Office

Office européen des brevets

(11) Veröffentlichungsnummer: **0 100 892 B2**

(12) **NEUE EUROPÄISCHE PATENTSCHRIFT**

(45) Veröffentlichungstag der neuen Patentschrift:
21.11.91 Patentblatt 91/47

(51) Int. Cl.$^5$: **C08F 18/06, C09J 4/02**

(21) Anmeldenummer: 83106782.2

(22) Anmeldetag: 11.07.83

(54) Wässrige Polyvinylester-Dispersion, Verfahren zu ihrer Herstellung und ihre Verwendung.

Die Akte enthält technische Angaben, die nach dem Eingang der Anmeldung eingereicht wurden und die nicht in dieser Patentschrift enthalten sind.

(30) Priorität: 16.07.82 DE 3226681

(43) Veröffentlichungstag der Anmeldung:
22.02.84 Patentblatt 84/08

(45) Bekanntmachung des Hinweises auf die Patenterteilung:
12.03.86 Patentblatt 86/11

(45) Bekanntmachung des Hinweises auf die Entscheidung über den Einspruch:
21.11.91 Patentblatt 91/47

(84) Benannte Vertragsstaaten:
AT CH DE GB LI

(56) Entgegenhaltungen:
DE-A- 39 673
FR-A- 2 346 379
US-A- 2 996 462
Firmenschrift "Mowilith" polyvinylacetal 1959
Encyclopedia of polymer Science and Technology vol. 12, S. 800 1970

(73) Patentinhaber: HOECHST AKTIENGESELLSCHAFT
Postfach 80 03 20
W-6230 Frankfurt am Main 80 (DE)

(72) Erfinder: Ehmann, Werner, Dr.
Im Mainfeld 23/16
W-6000 Frankfurt am Main 71 (DE)
Erfinder: Homanner, Alfons
Kronberger Weg 32
W-6231 Sulzbach (DE)
Erfinder: Rinno, Helmut, Dr.
Goethestrasse 38
W-6238 Hofheim am Taunus (DE)

EP 0 100 892 B2

Jouve, 18, rue Saint-Denis, 75001 PARIS

## Beschreibung

Die Erfindung bezieht sich auf eine modifizierte, wässerige Polyvinylester- Dispersion, ein Verfahren zu ihrer Herstellung und ihre Verwendung als Klebstoff.

Wässerige Dispersionen von Polyvinylestern, im besonderen von Polyvinylacetat, finden vielseitige Verwendung. Diese reicht vom Einsatz als Schlichtemittel über Bindemittel für Anstrichstoffe bis zu Klebstoffen.

Durch die Unterschiede der Dispersionen in ihrer materiellen Zusammensetzung oder in ihrer Erscheinungsform werden ihre Verwendungsmöglichkeiten weitgehend festgelegt.

Als Klebstoffe für saugfähige, organische Substrate eignen sich Polyvinylacetat-Dispersionen, deren Partikel Durchmesser von etwa 0,3 bis 8 μm, in manchen Fällen bis etwa 20 μm aufweisen. Die Herstellung dieser Dispersionen ist bekannt (vgl. DE-PS Nr. 887411 ). Zu ihrer Stabilisierung werden Schutzkolloide, vorzugsweise Polyvinylalkohol, verwendet. Man polymerisiert den Vinylester, meist das Vinylacetat, in der wässerigen Schutzkolloidlösung, die ggf. noch kleine Mengen von Emulgatoren und puffernden Substanzen enthält, unter Verwendung von radikalerzeugenden Initiatoren. Von diesem Grundverfahren kennt man viele Varianten.

Die Bindefestigkeit von Verklebungen, die man mit Polyvinylester-Dispersionen hergestellt hat, ist sehr hoch, oft höher als die Cohäsion des verbundenen Substrats. Jedoch nicht nur die Endbindefestigkeit einer Verklebung ist wichtig; auch die Geschwindigkeit, mit der die Festigkeit ansteigt, soll möglichst hoch sein, besonders bei Verwendung des Klebstoffes im maschinellen Betrieb.

Es ist bekannt, dass sich die Abbindegeschwindigkeit von bestimmten Dispersionen durch äussere Weichmachung steigern lässt. Dieser Effekt ist jedoch bei polyvinylalkoholhaltigen Dispersionen nicht genügend ausgeprägt, ausserdem- wird dadurch der kalte Fluss der Verleimung erhöht und ihre Wärmestandfestigkeit wird vermindert. Dies ist beispielsweise bei Holzklebstoffen sehr störend. Eine gewisse Erhöhung der Abbindegeschwindigkeit kann auch durch nachträglichen Zusatz von Polyvinylalkohol zur Dispersion erreicht werden. Dieser Effekt ist jedoch umso geringer, je mehr Polyvinylalkohol die Dispersion bereits enthält und es kann schliesslich sogar eine Abnahme der Abbindegeschwindigkeit eintreten. Ferner kann die Zugabe von Polyvinylalkohol zu einer fertigen Dispersion praktisch nur in Form einer wässerigen Lösung erfolgen, wodurch der Feststoffgehalt der Dispersion in unerwünschter Weise verringert wird.

Aufgabe der Erfindung ist die Schaffung einer Polyvinylester-Dispersion, mit welcher besonders vorteilhaft Holz verklebt werden kann, wobei bereits nach wenigen Minuten eine hohe Festigkeit der Verklebung erreicht wird.

Es wurde gefunden, dass die Aufgabe gelöst werden kann, wenn man einer bestimmten Polyvinylester-Dispersion native Stärke zusetzt.

Gegenstand der Erfindung ist somit eine wässerige Polyvinylester-Dispersion mit einem Feststoffgehalt von 35 bis 65 Gew. -%, dadurch gekennzeichnet, dass 3 bis 60 Gew.-% der dispergierten Partikel einen Durchmesser von kleiner 1 μm aufweisen und zu 95 bis 100 Gew.-% aus Polyvinylacetat oder einem Vinylacetatmischpolymerisat und zu 0 bis 5 Gew. -% aus nativer Stärke bestehen, dass 40 bis 97 Gew.-% der dispergierten Partikel einen Durchmesser von 1 bis 40 μm aufweisen und zu 20 bis 95 Gew.-% aus Polyvinylacetat oder einem Vinylacetatmischpolymerisat und zu 5 bis 80 Gew.-% aus nativer Stärke bestehen, und dass die Dispersion 3 bis 12 Gew.-% bezogen auf die Gzsamtmenge der dispergierten Partikel, Polyvinylalkohol der eine Esterzahl von 60 bis 210 besitzt und dessen 4%ige wässerige Lösung eine Viskosität von 4 bis 60 mPa·s, gemessen bei 20°C, aufweist enthält.

Gegenstand der Erfindung ist weiterhin ein Verfahren zur Herstellung einer wässerigen Polyvinylester-Dispersion mit einem Feststoffgehalt von 35 bis 65 Gew.-%, wobei ein Teil der dispergierten Partikel aus nativer Stärke besteht, durch radikalische Polymerisation von Vinylacetat, ggf. zusammen mit bis zu etwa 10 Gew.-%, bezogen auf Gesamtpolymerisat, an mischpolymerisierbaren Verbindungen, in wässeriger Emulsion in Gegenwart von Polyvinylalkohol, dadurch gekennzeichnet, dass man die Polymerisation in Gegenwart von 3 bis 15 Gew.-%, bezogen auf das oder die zu polymerisierende(n) Monomere(n), Polyvinylalkohol, der eine Esterzahl von 60 bis 210 besitzt und dessen 4%ige wässerige Lösung eine Viskosität von 4 bis 60 mPa · s, gemessen bei 20° C, aufweist, durchführt und anchsliessend die native Stärke homogen in der erhaltenen Dispersion verteilt.

Gegenstand der Erfindung ist schliesslich die Verwendung dieser Polyvinylester- Dispersion zur Herstellung von Klebstoffen für poröse organische Substrate, beispielsweise Holz.

Zur Herstellung der erfindungsgemässen Dispersion benötigt man eine wässerige Polyvinylacetat-Primärdispersion, deren Partikel eine bestimmte Grösse besitzen und die mit einer Mindestmenge von Polyvinylalkohol mit bestimmter Esterzahl hergestellt wurde. Die Partikel können aus Polyvinylacetat oder aus einem Mischpolymerisat aus überwiegend Vinylacetat mit geringen Mengen, bis etwa 10 Gew. -%, bezogen auf Gesamtpolymerisat, anderen mischpolymerisierbaren Verbindungen wie höheren Vinylestern, Äthylen, Maleinsäureestern, Acrylsäure, Methacrylsäure, Crotonsäure, Maleinsäure oder Natriumethensulfonat bestehen.

Die Bereitung der für die Herstellung der erfindungsgemässen Dispersion benötigten Polymer-Primärdispersion geschieht in bekannter Weise. In einer wässerigen Lösung von Polyvinylalkohol wird Vinylacetat und ggf. die Comonomeren in Emulsion polymerisiert. Dies geschieht wie üblich durch radikalerzeugende Initiatoren wie Peroxidisulfate, Wasserstoffperoxid, organische Peroxide oder Redoxinitiatoren. Die Reaktion wird vorzugsweise derart durchgeführt, dass in die auf etwa 40 bis 80° C vorgeheizte, durch eine Rührvorrichtung in Bewegung gehaltene Polyvinylalkohollösung, verteilt über mehrere Stunden, das oder die Monomere(n) und der Initiator zugegeben werden. Die Polymerisation erfolgt während dieser Zeit bei einer Temperatur, je nach Art des verwendeten Initiators und der Abführung der Polymerisationswärme, von etwa 40 bis 100° C, vorzugsweise von 65 bis 90° C. Es ist auch möglich, den gesamten Initiator in die wässerige Phase zu geben, bevor man mit der Zugabe des oder der Monomeren beginnt. Analog kann auch das gesamte Monomere vor dem Polymerisationsstart in der Polyvinylalkohollösung emulgiert werden. Bei einer weiteren Variante der Dispersionsherstellung werden Polyvinylalkohollösung und Monomere und Initiator gemischt und diese Mischung kontinuierlich in den Reaktor gegeben, wo die Polymerisation erfolgt. Zur Stabilisierung der Polymerdispersion dient Polyvinylalkohol. Gemische von Polyvinylalkoholen unterschiedlichen Molekulargewichts und unterschiedlichen Hydrolysegrades können verwendet werden. Bei der Herstellung der Dispersion werden 3 bis 15 Gew.-%, vorzugsweise 4 bis 12 Gew.-% Polyvinylalkohol, bezogen auf Polymerisierendes Monomer, eingesetzt. Die Viskosität der 4%igen wässerigen Lösung des verwendeten Polyvinylalkohols beträgt 4 bis 60 mPa · s, vorzugsweise beträgt sie 18 bis 50 mPa · s, gemessen bei 20° C. Die Esterzahl des Polyvinylalkohols beträgt 60 bis 210, vorzugsweise 100 bis 180. Ausser dem Polyvinylalkohol können in der wässerigen Phase in untergeordneter Menge noch andere Schutzkolloide wie Stärkederivate, gelöste Nativ- oder Quellstärke oder oberflächenaktive ionische oder nichtionische Substanzen enthalten sein. Der Feststoffgehalt der Verwendung findenden Primärdispersion (ermittelt durch Trocknen bei 110° C) liegt bei 30 bis 65 Gew.-%. Er ist nur insofern wichtig, als er die Herstellung erfindungsgemässer Dispersionen mit bestimmtem Feststoffgehalt ermöglicht. Die Latexviskosität der Primärdispersion liegt im allgemeinen zwischen 5 und 50 Pa·s.

Derartige Primärdispersionen von Polyvinylacetat oder Mischpolymerisaten des Vinylacetats sind auch im Handel käuflich erhältlich.

In die Primärdispersion wird mittels geeigneter technischer Hilfsmittel, z. B. einem Ankerrührer, einem Propellerrührer mit hoher Drehzahl, einem Walzenstuhl, einem Planetenmischer oder einem ähnlichen Gerät, eine bestimmte Menge nativer Stärke gleichmässig verteilt.

Die erfindungsgemässe Dispersion soll eine bestimmte Menge Polyvinylalkohol enthalten. Man gibt daher bei dem Mischprozess ggf. Polyvinylalkohol, am besten als wässerige Lösung zu. Auch Wasser allein kann eingemischt werden, um einen bestimmten Feststoffgehalt einzustellen.

Die Gesamtmenge Polyvinylalkohol, die sich in der erfindungsgemässen Dispersion befindet, also der Polyvinylalkohol in der Primärdispersion plus der eventuell beim Mischen zugefügte, soll 3 bis 12 Gew.-%, vorzugsweise 5 bis 10 Gew.-%, bezogen auf alle dispergierten Partikel, betragen. Man erhält eine besonders hohe Abbindegeschwindigkeit der Dispersion, wenn die Polyvinylalkohol-Menge, bezogen auf alle dispergierten Partikel, nach dem Einmischen der Stärke nicht wesentlich geringer ist, als sie in der Primärdispersion war.

Eine bevorzugte Ausführungsform der Dispersionsherstellung ist es daher, dass beim Mischen der Dispersion und der Stärke noch weiterer Polyvinylalkohol entsprechend dem Stärkezusatz zugegeben wird.

Das Mischen der Primärdispersion mit der nativen Stärke kann in der Weise geschehen, dass die Stärke zuerst in der berechneten Menge Wasser oder Polyvinylalkohollösung — man bevorzugt einen Polyvinylalkohol, dessen 4%ige, wässerige Lösung eine Viskosität von mehr als 16 mPa·s, vorzugsweise 20 bis 60 mPa·s aufweist — angeteigt wird und diese Vorsuspension dann mit der Primärdispersion vermischt wird. Man kann auch in die Primärdispersion, ggf. nach vorherigem Vermischen mit Wasser oder Polyvinylalkohollösung, die trockene Stärke unter Rühren oder Kneten eintragen. Dabei ist darauf zu achten, dass die Temperatur der Mischung nicht über die Gelatinierungstemperatur der Stärkepartikel ansteigt. Die so hergestellte Dispersion enthält 35 bis 65 Gew.-% nicht flüchtige Anteile.

Bei der Stärke handelt es sich um native, also chemisch nicht modifizierte und keinem Abbauprozess unterzogene Stärke. Die Stärkekörner besitzen einen Durchmesser von etwa 1 bis 40 μm, vorzugsweise 2 bis 25 μm, wie dies z. B. bei den aus Mais, Reis oder Weizen gewonnenen Stärken der Fall ist.

95 bis 100 Gew.-% der kleinen Partikel (kleiner 1 μm) in der fertigen erfindungsgemässen Dispersion bestehen aus Polyvinylacetat oder einem Vinylacetatmischpolymerisat, 0 bis 5 Gew.-% aus Stärke. Die grossen Partikel (1 bis 40 μm) bestehen zu 20 bis 95 Gew.-%, vorzugsweise zu 40 bis 95 Gew. -% aus Polyvinylacetat oder einem Vinylacetatmischpolymerisat und zu 6 bis 80 Gew.-%, vorzugsweise zu 5 bis 60 Gew.-% aus Stärke. Die Gesamtmenge der dispergierten Partikel besteht zu etwa 2 bis 70, vorzugsweise 5 bis 50 Gew. -% aus Stärke.

Die Prüfung der Klebeeigenschaften wird in der Weise vorgenommen, dass auf einem Prüfkörper aus Buchenholz die zu prüfende Dispersion in einer Schichtdicke von 0,3 mm aufgetragen wird. Darauf wird ein

EP 0 100 892 B2

anderer Prüfkörper auf einer Fläche von 3 cm² mit einem Druck von 1 bar 2,5 min aufgepresst und sofort die Bindefestigkeit mittels einer Reissmaschine bestimmt und das arithmetische Mittel aus 20 Verklebungen in N/mm² errechnet. Dieser Wert ist ein Mass für die Abbindegeschwindigkeit. Nach 24 h Lagerung und Reissen erhält man den Wert für die Endbindefestigkeit.

Wenn man in einer Polyvinylacetat- Dispersion die plastischen Polyvinylacetatpartikel teilweise durch klebetechnisch neutrale, starre Stärkepartikel ersetzt, so hätte man erwarten müssen, dass die Klebekraft der Dispersion mehr oder weniger stark abnimmt. Statt dessen bleibt sie bis zu einem erheblichen Stärkeanteil erhalten. Es überrascht, dass die Abbindegeschwindigkeit beispielsweise beim Verkleben von Holz mit der erfindungsgemässen Dispersion bei steigendem Gehalt an Stärkepartikeln zunächst eindeutig ansteigt und erst bei hohem Stärkeanteil abfällt.

Die erfindungsgemässe Dispersion eignet sich besonders zum Verkleben von porösen Substraten, beispielsweise wenn ein rasches Abbinden erwünscht ist. Ein weiterer Vorteil ist, dass dieser Effekt mit Stärke, also einem Material, das von der Erdölbasis unabhängig ist, erreicht wird.

Die folgenden Beispiele dienen zur näheren Erläuterung der Erfindung. Prozentangaben beziehen sich jeweils auf das Gewicht.

*Beispiel 1 bis 7 und Vergleichsbeispiel A:*

Unter Zuhilfenahme eines schnelldrehenden Propellerrührers werden gemischt

1. eine wässerige, etwa 60 Gew.-% nichtflüchtige Bestandteile enthaltende Polyvinylacetat-Dispersion A1. Sie enthält etwa 56 Gew.-% Polyvinylacetat-Partikel, von denen 53 Gew.-% Durchmesser kleiner 1 μm und 47 Gew.-% Durchmesser von 1 bis 5 μm haben. Sie wurde wie folgt hergestellt:

In einem 100-l-Kessel aus nichtrostendem Stahl, ausgestattet mit Ankerrührer (100 U/min), Rückflusskühler, Heiz-, Kühl- und Dosiervorrichtungen, wurden 22 kg entsalztes Wasser gegeben und darin 2,2 kg eines Polyvinylalkohols mit der Esterzahl 135 und einer Viskosität seiner 4%igen wässerigen Lösung bei 20° C von 20 mPa · s gelöst. Dazu wurden 0,6 g Cobaltacetat gegeben und der Ansatz mit 2N-Schwefelsäure auf pH 4 eingestellt. Unter Rühren wurden 32 kg Vinylacetat und 75 g 30%iges Wasserstoffperoxid zugegeben. Durch Aufheizen des Kesselinhaltes bis zur Rückflusstemperatur des Vinylacetats wurde die Polymerisation gestartet und dann innerhalb etwa 2 h durchgeführt. Zur Vervollständigung der Reaktion wurde noch 1 h bei 80° C gehalten und dann die Dispersion gekühlt;

2. eine 8,9%ige wässerige Lösung B1 von Polyvinylalkohol mit der Esterzahl 90, dessen 4%ige wässerige Lösung eine Viskosität von 23 mPa·s hat;

3. eine natürliche Maisstärke mit einem Wassergehalt von 10 Gew.-%. Wenigstens 90 Gew.-% der Stärkepartikel haben einen Durchmesser von 5 bis 22 μm.

Die Tabelle 1 zeigt die verschiedenen Mischungsverhältnisse und die Bindefestigkeiten, die man bei Verkleben von Buchenholz mit diesen Mischungen nach 2,5 min und nach 24 h erzielt. Zum Vergleich wird ein Versuch mit der reinen Primärdispersion A1 durchgeführt (= Vergleichsbeispiel A).

*Tabelle 1*

| Beispiel | Disp. A1 | PVAL-Lösung B1 | Maisstärke | Bindefestigkeit in N/mm² nach | |
|---|---|---|---|---|---|
| | | | | 2½ min | 24 h |
| Vergleich A | 1000 g | — | — | 3,6 | 7,3 |
| 1 | 1000 g | 30 g | 51 g | 4,0 | 7,2 |
| 2 | 1000 g | 90 g | 153 g | 4,2 | 7,2 |
| 3 | 1000 g | 150 g | 255 g | 4,5 | 7,3 |
| 4 | 1000 g | 240 g | 408 g | 4,8 | 7,2 |
| 5 | 1000 g | 330 g | 561 g | 4,3 | 7,1 |
| 6 | 1000 g | 450 g | 765 g | 4,1 | 7,0 |
| 7 | 1000 g | 600 g | 1020 g | 3,7 | 6,9 |

*Beispiel 8 bis 11:*

Man mischt
1. die Polyvinylacetat-Dispersion A1 wie in Beispiel 1 bis 7;
2. eine 5%ige, wässerige Lösung B2 eines Polyvinylalkohols mit der Esterzahl 130, dessen 4%ige wässerige Lösung eine Viskosität von 26 mPa · s hat;

4

3. eine Reisstärke mit 95 Gew.-% nichtflüchtigen Anteilen und einer Partikelgrösse von 2 bis 6 μm.

Die Tabelle 2 zeigt die Mischungsverhältnisse und die Bindefestigkeiten, die man beim Verkleben von Buchenholz mit diesen Mischungen nach 2,5 min und nach 24 h erzielt.

*Tabelle 2*

| Beispiel | Disp. A1 | PVAL-Lösung B2 | Reisstärke | Bindefestigkeit in N/mm² nach | |
|---|---|---|---|---|---|
| | | | | 2½ min | 24 h |
| Vergleich A | 1000 g | — | — | 3,6 | 7,3 |
| 8 | 1000 g | 70 g | 110 g | 3,8 | 7,4 |
| 9 | 1000 g | 210 g | 330 g | 4,1 | 7,1 |
| 10 | 1000 g | 420 g | 660 g | 3,9 | 7,0 |
| 11 | 1000 g | 560 g | 880 g | 3,4 | 6,7 |

*Beispiel 12 und 13 und Vergleichsbeispiel B:*

Man mischt

1. eine wässerige, etwa 50 Gew.-% nichtflüchtige Bestandteile enthaltende Dispersion A2. Sie enthält 45,4 Gew.-% Polyvinylacetat-Partikel, von denen 20 Gew.-% Durchmesser von kleiner 1 μm und 80 Gew.-% Durchmesser von 1 bis 5 μm haben. Sie wurde auf folgende Weise hergestellt:

In einen 100-l- Kessel aus rostfreiem Stahl, ausgestattet mit einem Ankerrührer (100 U/min), Rückflusskühler, Heiz-, Kühl- und Dosiereinrichtungen, wurden 27 kg entsalztes Wasser gegeben und darin 2,5 kg eines Polyvinylalkohols mit der Esterzahl 140 und einer Viskosität seiner 4%igen wässerigen Lösung bei 20° C von 26 mPa · s gelöst. Unter Rühren wurden 25 kg Vinylacetat, 0,04 kg Maleinsäureanhydrid, 0,01 kg Dilauroylperoxid und 0,005 kg Natriumperoxidisulfat zugegeben. Die Polymerisation wurde unter Rückfluss des Vinylacetats durchgeführt;

2. eine Weizenstärke mit 87 Gew.-% nichtflüchtigen Bestandteilen und einer Partikelgrösse von 3 bis 28 μm.

Die Tabelle 3 zeigt die Mischungsverhältnisse und die Bindefestigkeiten, die man beim Verkleben von Buchenholz mit diesen Mischungen nach 2,5 min und nach 24 h erzielt.

Zum Vergleich wird ein Versuch mit der reinen Primärdispersion A2 durchgeführt (= Vergleichsbeispiel B).

*Tabelle 3*

| Beispiel | Disp. A2 | Weizen-stärke | Bindefestigkeit in N/mm² nach | |
|---|---|---|---|---|
| | | | 2½ min | 24 h |
| Vergleich B | 1000 g | — | 3,5 | 8,0 |
| 12 | 1000 g | 200 g | 4,3 | 7,9 |
| 13 | 1000 g | 300 g | 3,6 | 7,4 |

*Beispiel 14 bis 20 und Vergleichsbeispiel C:*

Man mischt

1. eine wässerige, etwa 40 Gew.-% nichtflüchtige Bestandteile enthaltende Primärdispersion A3. Sie enthält etwa 37 Gew.-% Partikel aus einem Mischpolymerisat aus Vinylacetat und Natriumethensulfonat, von denen 33 Gew.-% einen Durchmesser von kleiner 1 μm und 67 Gew.-% einen Durchmesser von 1 bis 12 μm haben. Sie war wie folgt hergestellt worden:

In einem 100-l-Kessel aus rostfreiem Stahl, ausgestattet mit einem Ankerrührer (100 U/min), Rückflusskühler, Heiz-, Kühl- und Dosiereinrichtung, wurden in 47 kg entsalztem Wasser 1,2 kg eines Polyvinylalkohols mit einer Esterzahl von 120 und einer Viskosität seiner 4%igen wässerigen Lösung bei 20° C von 20 mPa · s und 1,2 kg eines Polyvinylalkohols mit einer Esterzahl von 160 und einer Viskosität seiner 4%igen wässerigen Lösüng bei 20° C von 40 mPa · s gelöst. Dazu wurde 1 kg einer wässerigen, 25 Gew.-%igen Lösung von Natriumethensulfonat gegeben. Der Kesselinhalt wurde auf eine Temperatur von 66° C gebracht, 3 kg Vinylacetat einemulgiert und danach 25 g Ammoniumperoxidisulfat zugegeben. Nach 40 min wurde begonnen, innerhalb von 4 h 27 kg Vinylacetat einzudosieren. Durch Betätigen der Heiz- bzw. Kühleinrichtung wurde die Polymerisation- bei einer Temperatur von 70 bis 72° C durchgeführt. Nach Zugabe des Vinylacetats wurden 5 g Ammoniumperoxidisulfat, gelöst in 100 g Wasser, zugegeben und zur Vervollständigung der Polymerisation das Reaktionsgut 2 h bei 80° C gehalten;

2. eine 12%ige wässerige Lösung B3 eines Polyvinylalkohols mit der Esterzahl 60, dessen 4%ige wässerige Lösung eine Viskosität von 18 mPa · s hat;

3. eine Maisstärke mit 87 Gew.-% nichtflüchtigen Anteilen und einem Partikeldurchmesser von 7 bis 20 μm.

Die Tabelle 4 zeigt die Mischungsverhältnisse und deren Klebeeigenschaften.

Zum Vergleich wird ein Versuch mit der reinen Primärdispersion A3 durchgeführt ( = Vergleichsbeispiel C).

### Tabelle 4

| Beispiel | Disp. A3 | PVAL-Lösung B3 | Maisstärke | Bindefestigkeit in N/mm² nach | |
|---|---|---|---|---|---|
| | | | | 2½ min | 24 h |
| Vergleich C | 1000 g | — | — | 1,7 | 9,5 |
| 14 | 1000 g | 35 g | 50 g | 1,9 | 9,4 |
| 15 | 1000 g | 70 g | 100 g | 2,4 | 9,5 |
| 16 | 1000 g | 140 g | 200 g | 3,5 | 9,3 |
| 17 | 1000 g | 210 g | 300 g | 3,6 | 9,4 |
| 18 | 1000 g | 280 g | 400 g | 3,4 | 9,3 |
| 19 | 1000 g | 420 g | 600 g | 2,8 | 9,1 |
| 20 | 1000 g | 560 g | 800 g | 2,0 | 8,9 |

## Patentansprüche

### Patentansprüche für folgende Vertragsstaaten: CH, DE, GB, LI

1. Wässerige Polyvinylester- Dispersion mit einem Feststoffgehalt von 35 bis 65 Gew.-%, dadurch gekennzeichnet, dass 3 bis 60 Gew.-% der dispergierten Partikel einen Durchmesser von kleiner 1 μm aufweisen und zu 95 bis 100 Gew.-% aus Polyvinylacetat oder einem Vinylacetatmischpolymerisat und zu 0 bis 5 Gew. -% aus nativer Stärke bestehen, dass 40 bis 97 Gew.-% der dispergierten Partikel einen Durchmesser von 1 bis 40 μm aufweisen und zu 20 bis 95 Gew.-% aus Polyvinylacetat oder einem Vinylacetatmischpolymerisat und zu 5 bis 80 Gew.-% aus nativer Stärke bestehen, und dass die Dispersion 3 bis 12 Gew.-%, bezogen auf die Gesamtmenge der dispergierten Partikel, Polyvinylalkohol der eine Esterzahl von 60 bis 210 besitzt und dessen 4%ige wässerige Lösung eine Viskosität von 4 bis 60 mPa·s, gemessen bei 20°C, aufweist enthält.

2. Verfahren zur Herstellung einer wässerigen Polyvinylester-Dispersion mit einem Feststoffgehalt von 35 bis 65 Gew.-%, wobei ein Teil der dispergierten Partikel als nativer Stärke besteht, durch radikalische Polymerisation von Vinylacetat, ggf. zusammen mit bis zu etwa 10 Gew.-%, bezogen auf Gesamtpolymerisat, an mischpolymerisierbaren Verbindungen in wässeriger Emulsion in Gegenwart von Polyvinylalkohol, dadurch gekennzeichnet, dass man die Polymerisation in Gegenwart von 3 bis 15 Gew. -%, bezogen auf den zu polymerisierenden Vinylester, Polyvinylalkohol, der eine Esterzahl von 60 bis 210 besitzt und dessen 4% ige wässerige Lösung eine Viskosität von 4 bis 60 mPa·s, gemessen bei 20°C, aufweist, durchführt und anschliessend die native Stärke homogen in der erhaltenen Dispersion verteilt.

3. Verwendung der Dispersion gemäss Anspruch 1 zur Herstellung von Klebstoffen für poröse Substrate.

### Patentansprüche für folgenden Vertragsstaat: AT

1. Verfahren zur Herstellung einer wässerigen Polyvinylester- Dispersion mit einem Feststoffgehalt von 35 bis 65 Gew.-%, wobei ein Teil der dispergierten Partikel aus nativer Stärke besteht, durch radikalische Polymerisation von Vinylacetat, ggf. zusammen mit bis zu etwa 10 Gew.-%, bezogen auf Gesamtpolymerisat, an mischpolymerisierbaren Verbindungen in wässeriger Emulsion in Gegenwart von Polyvinylalkohol, dadurch gekennzeichnet, dass man die Polymerisation in Gegenwart von 3 bis 15 Gew.-%, bezogen auf den zu polymerisierenden Vinylester, Polyvinylalkohol, der eine Esterzahl von 60 bis 210 besitzt und dessen 4%ige wässerige Lösung eine Viskosität von 4 bis 60 mPa·s, gemessen bei 20°C, aufweist, durchführt und anschliessend die native Stärke homogen in der erhaltenen Dispersion verteilt.

2. Verfahren nach Anspruch 1, dadurch gekennzeichnet dass in der resultierenden wässerigen Polyvinylester-Dispersion 3 bis 60 Gew. -% der dispergierten Partikel einen Durchmesser von kleiner 1 μm aufweisen und zu 95 bis 100 Gew.-% aus Polyvinylacetat oder einem Vinylacetatmischpolymerisat und zu 0 bis 5 Gew.-% aus nativer Stärke bestehen, dass 40 bis 97 Gew.-% der dispergierten Partikel einen Durchmesser von 1 bis 40 μm aufweisen und zu 20 bis 95 Gew.-% aus Polyvinylacetat oder einem Vinylacetatmischpolymerisat und zu 5 bis 80 Gew.-% aus nativer Stärke bestehen, und dass die Dispersion 3 bis 12 Gew.-%, bezogen auf die Gesamtmenge der dispergierten Partikel, Polyvinylalkohol enthält.

3. Verwendung der Dispersion gemäss Ansprüchen 1 und 2 zur Herstellung von Klebstoffen für poröse Substrate.

## Claims

### Claims for the following Contracting States: CH, DE, GB, LI

1. An aqueous polyvinyl ester dispersion having a solids content of from 35 to 65 weight %, wherein from 3 to 60 weight % of the dispersed particles have a diameter of below 1 μm and consist in an amount of from 95 to 100 weight % of polyvinyl acetate or a vinyl acetate copolymer and in an amount of from 0 to 5 weight % of native starch; from 40 to 97 weight % of the dispersed particles have a diameter of from 1 to 40 μm and consist in an amount of from 20 to 95 weight % of polyvinyl acetate or a vinyl acetate copolymer and in an amount of from 5 to 80 weight % of native starch; and the dispersion contains from 3 to 12 weight %, relative to the total amount of the dispersed particles, of polyvinyl alcohol having an ester number of from 60 to 210 and the 4 % aqueous solution of which has a viscosity of 4 to 60 mPa·s measured at 20 °C.

2. A process for the manufacture of an aqueous polyvinyl ester dispersion having a solids content of from 35 to 65 weight %, part of the dispersed particles consisting of native starch, by radical-initiated polymerization of vinyl acetate, optionally together with up to about 10 weight %, relative to the total polymer, of copolymerizable compounds, in an aqueous emulsion in the presence of polyvinyl alcohol, which comprises carrying out the polymerization in the presence of from 3 to 15 weight %, relative to the vinyl ester to be polymerized, of polyvinyl alcohol having an ester number of from 60 to 210 and the 4 % aqueous solution of which has a viscosity of 4 to 60 mPa·s measured at 20 °C, and subsequently distributing the native starch homogeneously in the dispersion obtained.

3. Use of the dispersion as claimed in claim 1 for manufacturing adhesives for porous substrates.

### Claims for the following Contracting State: AT

1. A process for the manufacture of an aqueous polyvinyl ester dispersion having a solids content of from 35 to 65 weight%, part of the dispersed particles consisting of native starch, by radicalinitiated polymerization of vinyl acetate, optionally together with up to about 10 weight%, relative to the total polymer, of copolymerizable compounds, in an aqueous emulsion in the presence of polyvinyl alcohol, which comprises carrying out the polymerization in the presence of from 3 to 15 weight%, relative to the vinyl ester to be polymerized, of polyvinyl alcohol having an ester number of from 60 to 210 and the 4% aqueous solution of which has a viscosity of 4 to 60 mPa·s measured at 20° C, and subsequently distributing the native starch homogeneously in the dispersion obtained.

2. The process as claimed in Claim 1, which comprises that in the resulting aqueous polyvinyl ester dispersion from 3 to 60 weight% of the dispersed particles have a diameter of below 1 μm and consist in an amount of from 95 to 100 weight% of polyvinyl acetate or a vinyl acetate copolymer and in an amount of from 0 to 5 weight% of native starch; from 40 to 97 weight% of the dispersed particles have a diameter of from 1 to 40 μm and consist in an amount of from 20 to 95 weight% of polyvinyl acetate or a vinyl acetate copolymer and in an amount of from 5 to 80 weight% of native starch, and the dispersion contains from 3 to 12 weight%, relative to the total amount of the dispersed particles, of polyvinyl alcohol.

3. Use of the dispersion prepared as claimed in Claims 1 and 2 for manufacturing adhesives for porous substrates.

### Revendications

**Revendications pour les Etats contractants suivants : CH, DE, GB, LI**

1. Dispersion aqueuse d'un ester polyvinylique ayant une teneur en matière solide de 35 à 65 % en poids, caractérisée en ce que 3 à 60 % en poids des particules dispersées ont un diamètre inférieur à 1 μm et sont constitués pour 95 à 100 % en poids d'acétate de polyvinyle ou d'un copolymère d'acétate de vinyle et pour 0 à 5 % en poids d'amidon natif, que 40 à 97 % en poids des particules dispersées ont un diamètre de 1 à 40 μm et sont constitués pour 20 à 95 % en poids d'acétate de polyvinyle ou d'un copolymère d'acétate de vinyle et pour 5 à 80 % en poids d'amidon natif, et que la dispersion contient de 3 à 12 % en poids, par rapport à la quantité totale des particules dispersées, d'alcool polyvinylique ayant un indice d'ester de 60 à 210 et dont la solution aqueuse à 4 % a une viscosité de 4 à 60 mPa·s, mesurée à 20 °C.

2. Procédé de préparation d'une dispersion aqueuse d'un ester polyvinylique ayant une teneur en matière solide de 35 à 65 % en poids, une partie des particules dispersées étant constituée d'amidon natif, par polymérisation amorcée par des radicaux libres d'acétate de vinyle, le cas échéant, avec jusqu'à environ 10 % en poids, par rapport au polymère totale, de composés copolymérisables, en émulsion aqueuse, en présence d'alcool polyvinylique, procédé caractérisé en ce qu'on effectue la polymérisation en présence de 3 à 15 % en poids, par rapport à l'ester vinylique à polymériser, d'alcool polyvinylique ayant un indice d'ester de 60 à 210 et dont la solution aqueuse à 4 % a une viscosité de 4 à 60 mPa·s, mesurée à 20 °C, et qu'on distribue ensuite l'amidon natif de manière homogène dans la dispersion obtenue.

3. Utilisation de la dispersion selon la revendication 1 pour la préparation d'adhesifs pour des substrats poreux.

**Revendications pour l'Etat contractant suivant: AT**

1. Procédé de préparation d'une dispersion aqueuse d'un ester polyvinylique ayant une teneur en matière solide de 35 à 65% en poids, une partie des particules dispersées étant constituée d'amidon natif, par polymérisation amorcée par des radicaux libres d'acétate de vinyle, le cas échéant, avec jusqu'à environ 10% en poids, par rapport au polymère total, de composés copolymérisables, en émulsion aqueuse, en présence d'alcool polyvinylique, procédé caractérisé en ce qu'on effectue la polymérisation en présence de 3 à 15% en poids, par rapport à l'ester vinylique à polymériser, d'alcool polyvinylique ayant un indice d'ester de 60 à 210 et dont la solution aqueuse à 4% a une viscosité de 4 à 60 mPa · s, mesurée à 20° C, et en ce qu'on distribue l'amidon natif de manière homogène dans la dispersion obtenue.

2. Procédé selon la revendication 1, caractérisé en ce que 3 à 60% en poids des particules dispersées dans la dispersion aqueuse de l'ester polyvinylique obtenue ont un diamètre inférieur à 1 μm et sont constituées pour 95 à 100% en poids d'acétate de polyvinyle ou d'un copolymère d'acétate de vinyle et pour 0 à 5% en poids d'amidon natif, que 40 à 97% en poids des particules dispersées ont un diamètre de 1 à 40 μm et sont constituées pour 20 à 95% en poids d'acétate de polyvinyle ou d'un copolymère d'acétate de vinyle et pour 5 à 80% en poids d'amidon natif et que la dispersion contient de 3 à 12% en poids, par rapport à la quantité totale des particules dispersées, d'alcool polyvinylique.

3. Utilisation de la dispersion selon l'une des revendications 1 ou 2 pour la préparation d'adhésifs pour des substrats poreux.